Europäisches Patentamt

(19) European Patent Office

Office européen des brevets

(11) Publication number: 0 178 727
A2

(12) # EUROPEAN PATENT APPLICATION

(21) Application number: 85201647.6

(22) Date of filing: 09.10.85

(51) Int. Cl.⁴: G 05 B 19/417

(30) Priority: 12.10.84 IT 2311984

(43) Date of publication of application:
23.04.86 Bulletin 86/17

(84) Designated Contracting States:
DE FR SE

(71) Applicant: N.V. Philips' Gloeilampenfabrieken
Groenewoudseweg 1
NL-5621 BA Eindhoven(NL)

(72) Inventor: Piva, Giuliano
c/o INT. OCTROOIBUREAU B.V. Prof. Holstlaan 6
NL-5656 AA Eindhoven(NL)

(74) Representative: Bos, Kornelis Sjoerd et al,
INTERNATIONAAL OCTROOIBUREAU B.V.
Prof.Holstlaan 6
NL-5656 AA Eindhoven(NL)

(54) Method and plant for the controlled robotization of operations carried out on production lines.

(57) To enable robots to be used on production lines for products in which points at which operations are to be carried out vary within wide tolerances from one product to another, it is proposed to use a manual simulator which identifies for each product the points at which operator robots disposed downstream are to operate.

The information originating from the manual simulator passes to a processor which controls the action of the various operator robots in such a manner that they operate in the determined position or positions for which they are authorised, in order to carry out the operations assigned to them.

Fig. 1

EP 0 178 727 A2

METHOD AND PLANT FOR THE CONTROLLED ROBOTIZATION OF OPERATIONS CARRIED
OUT ON PRODUCTION LINES


        This invention relates to a method and plant for the
controlled robotization of operations carried out on production lines
(assembly lines or fixed stations).
        Advantageously, although not exclusively, the inventin
is apllied to production lines for domestic refrigerators, cookers, dish
washers, laundry washing machines, cabinet furniture and the like. With
particular but not exclusive reference to the series-production of
domestic refrigerators, certain operations such as the screwing of
parts and the fitting of certain components cannot be done by operators
robots because of excessive working tolerances. This becomes abundantly
clear on mere consideration of the fact that the positions of the holes
for the screws which fix the condenser to the rear wall of the
refrigerator can vary by as much as some millimeters from their
theoretical position, and this variation is different from one
refrigerator to another. This range of variation is particulary
accentuated by the nature of the means (for example slat conveyors,
conveyor belts) which convey the refrigerators from one working station
to another. To this must be added that the position in which
refrigerators lie on the production line can vary from one refrigerator
to another. In such a situation, robotization of these operations cannot
be attianed without using highly sophisticated and to a certain extent
untested methods which, besides not ensuring proper reliability, require
such considerable investment as to make robotization uneconomical.
        The object of the present invention is to provide a
method and plant which allow robotization of operations carried out on
production lines for products in which the points at which the operators
robots are required to operate are not constant.
        This and furhter objects which will be more apparent from
the detailed description given herinafter are attained by a robotization
method characterised essentially by comprising and initial manually
controlled stage in which the positions in which the operations are to
be carried out are determinded for each individual product, and a stage in which the positions in which operations are to be carried out are memorised and assigned to at least one operator robot.

The plant according to the invention, for implementing said method, comprises: a product transfer line; at least one station provided with a manual simulator or determining the positions in which operations are to be carried out on each individual product transferred from the line; a processor receiving from the manual simulator the data relative to the determined positions in which operations are to be carried out; and at least one operator robot for operating on the product on the basis of the signals received by the processor. The invention will be more apparent from the detailed description of a preferred embodiment thereof given by way of non-limiting example hereinafter and illustrated on the accompanying drawing, in which:

Figure 1 is a diagrammatic plan view of a refrigerator production plant constructed in accordance with the invention:

Figure 2 is a perspective view of a detail of a product support element which is conveyed together with the product along the production line; and

Figure 3 is a detailed view of the means used to create a reference plane, with respect to which the positions in which operations are to be carried out on the object are determined.

In the figures, the reference numeral 1 indicates a stepwise-advancing conveying line which, using conventional means, conveys rectangular support platforms 2 to predetermined distances. The platforms 2 serve as a support for the products on which operations are carried out for assembly purposes. In the case under examination, these products are domestic refrigerators 3. The platforms comprise an upright 4 in their front side in a position corresponding with a corner.

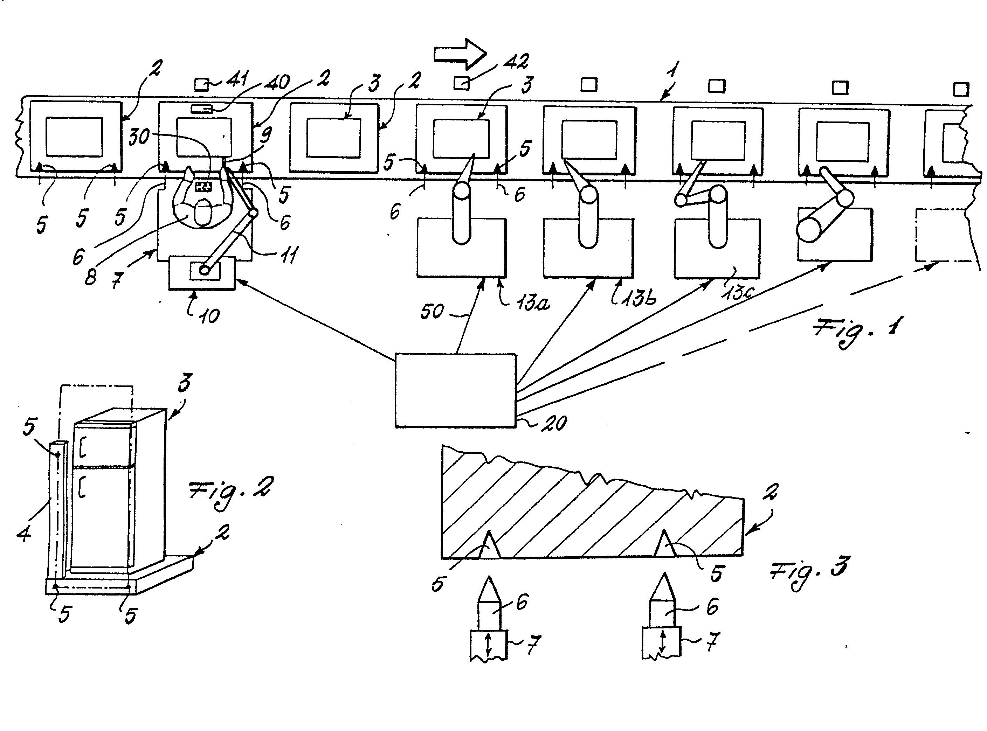

In the front face of the upright 4 of the platform 2 there is provided a set of three conical bores 5 distributed one in the former and two in the latter. A centering element 6, also conical, is designed to engage in each of said bores 5 (see Figure 3), and is mobile in the direction of the arrows by means of a pressurised fluid cylinder 7. When the centering elements 6 engage in the three conical bores 5, they centre the platform 2 and refrigerator 3.

The arrangement of the three bores 5 and of the three centering elements 6, which do not lie on a straight line, allows a reference plane and reference axis to be defined, as described hereinafter. A label, for example in bar code, is present on the platform, to identify both the platform 2 and the object 3 conveyed thereby. Along the line 1 there is disposed a station 7 housing an operator 8 who controls a keyboard 30 and a feeler 9 of a manual simulator 10, of known type, of which the articulated arm 11 carrying said feeler is shown. In this station there are provided the said centering elements 6, which are associated with the manual simulator 10 in the sense that the three items of data relative to their position are fed to the robot in question and to a processor 20, where they are processed to constitute a plane and a vertical axis contained in said plane, is a reference basis for the positions which the operator identifies on the refrigerator. The operator robots 13a, b, c etc., disposed in a row downstream along the production line at predetermined distances apart, operate on said positions.

in order to clarify this by means of an example, it will be assumed that each refrigerator comprises a series of holes into which the operator robots 13a, b, c,etc. are required to screw screws, and that because of the considerable working tolerances the position of the series of holes varies within appreciable limits from one refrigerator to another. After one of these refrigerators has reached the station 7 and the centering pins 6 have been inserted into the bores 5 of the platform carrying said refrigerator to thus create the reference plane and axis, the operator 8 manually moves the feeler 9 into positions corrsponding with the various holes of the series of holes, and each of these he presses a button associated with the feeler to thus feed this data item to a processor 20, after selecting on the selection keyboard 30 those operator robots which are to carry out the operation. When this stage is completed, the centering pins are withdrawn and the platform advances.

This set of data is memorised and processed by the processor 20, which emits control signals at the output or outputs associated with the operator robot or robots 13a, b, c which are to carry out the screwing operation on the particular refrigerator when this reaches them. In order for the operator robots 13a, 13b, 13c to operate on the specific refrigerator for which the positions of the holes have been identified, the platform 2 which carries it is provided with an identifying label 40 which is read by a reader 41, which feeds the relative data to the processor. When this refrigerator reaches the station in which the robot 13a operates, the centering pins 6 enter the bores 5 of the platform, and a reading head 42 reads the label 40 and feeds the data to the processor 20.

If for example the operator robot 13a is the one which is to carry out the screwing operation, and has thus been selected by the operator on the keyboard 30, the signal made available by the processor 20 to the line 50 and coatining the data relating to the position of the holes at which the screwing operation is to be carried out is fed to the robot 13a when authorised by the reading of the specific label. The robot 13a then carries out the scheduled screwing operations in the correct hole positions for the specific refrigerator, after which the centring pins 6 are withdrawn and the platform advances through one step to thus reach the next operator robot 13b where, if scheduled, further operations will be carried out on the refrigerator on the basis of the data determined by the operator by means of the manual simulator 10.

By virtue of the described method and plant, it is possible to ensure high production quality without excessive investment in terms of production and control machinery, because of the "personalised" memorisation which the simulator 10 transmits to the processor 20 and which this latter transfers to the various operator robots 13a, b ... disposed in succesion downstream along the production line. Further modifications of the present invention also fall within the scope of the inventionm idea. For example other members such as proximity switches and magnetic labels can be used instead of the mechanical centering elements 5, 6.

## CLAIMS

1.        A method for the robotization of operations carried out on a production line for products such as refrigerators, freezers, cookers, dishwasers, laundry washing machines and the like, characterised by comprising an initial manually controlled stage in which the positions in which operations are to be carried out are determined for each individual product, and a stage in which the positions in which operations are to be carried out are memorised and assigned to at least one operator robot.

2.        A method as claimed in claim 1, characterised in that the stage in which the positions in which operations are to be carried out are determined involves the initial of a reference plane and axis.

3.        A plant for implementing claimed in the preceding claims, characterised by comprising: a transfer line (1) for the product (3); at least one station (7) provided with a manual simulator (10) for determining positions in which operations are to be carried out on each individual product (3) transferred from the line (1); a processor (20) receiving fromthe manual simulator (10) the data relative to the determined posistions in which operations are to be carried out; and at least one operator robot (13a, b, c etc.) for operating on the product (1) on the basis of the signals received by the processor and deriving from those positions in which operations are to be carried out which have been determined by the manual simulator (10).

4.        A plant as claimed in claim 32, characterised in that product centering means (5, 6) are provided in the station (7) to define a position reference plane and axis.

5.        A plant as claimed in claims 3 and 4, characterised in that the centering means are provided in positions corresponding with each operator robot (13a, b, c, etc.).

6.        A plant as claimed in claims 3, 4 and 5, characterised in that the product (1) is mounted on platforms (2) provided with part of the centering means (5, 6).

7.        A plant as claimed in claims 3 to 6, characterised in that means (40, 41), are provided for identifying each individual object (1) or for identifying the platform (2) which carries it.

Fig. 1

Fig. 2

Fig. 3